# EUROPÄISCHE PATENTSCHRIFT

(11) **EP 0 304 620 B1**
(45) Veröffentlichungstag und Bekanntmachung des Hinweises auf die Patenterteilung: **29.09.1993**
(21) Anmeldenummer: 88111650.3
(22) Anmeldetag: 20.07.1988
(51) Int. Cl.: H01R 13/74, H02B 1/04

(54) **Mehrpoliger Kontakteinsatz mit Anbaugehäuse für Schaltschränke**
Multicontact insertion piece with annex case for switch cabinets
Pièce d'insertion multicontact à boîtier pour des armoires à manoeuvre

(30) Priorität: 20.08.1987 DE 8711286 U
(43) Veröffentlichungstag der Anmeldung: 01.03.1989
(73) Patentinhaber: HTS-Elektrotechnik GmbH, D-53819 Neunkirchen-Seelscheid (DE)
(72) Erfinder: Schmitz, Herbert, D-5206 Neunkirchen-S 1 (DE); Heinz, Elmar, D-5204 Lohmar (DE)
(74) Vertreter: Neumann, Ernst Dieter, Dipl.-Ing.

(56) Entgegenhaltungen:
- EP-A- 0 206 320
- DE-U- 8 308 220

## Beschreibung

Die Erfindung betrifft einen mehrpoligen Kontakteinsatz mit Anbaugehäuse für Schaltschränke o. dgl., wobei das Anbaugehäuse zum Einsetzen in eine Ausnehmung in einer Wand des Schaltschrankes ausgebildet ist und mit diese Ausnehmung überragenden Flanschen auf der Außenseite der Wand mittels Schrauben befestigbar ist, und wobei der mit Buchsen oder Stiften bestückte Kontakteinsatz von der Innenseite der Wand einsetzbar und mittels Schrauben am Anbaugehäuse befestigbar ist und auf der dem Anbaugehäuse abgewandten Seite mit metallischen Aufnahmehülsen und quer in diese eingesetzten Kontaktschrauben zur Aufnahme und Befestigung von Anschlußleitungen und auf der nach dem Einbau außen liegenden Seite mit Buchsen oder Stiften zur Aufnahme von Gegenstiften bzw. Gegenbuchsen eines aufzusetzenden Steckers versehen ist, wobei jede Aufnahmehülse elektrisch mit einer der Buchsen oder Stifte verbunden ist.

Bei den bekannten Kontakteinsätzen dieser Art mit Anbaugehäuse erfolgte die Montage so, daß das Anbaugehäuse sowie der Kontakteinsatz entweder bereits miteinander verschraubt waren und dann in die Ausnehmung der Wand des Schaltschrankes eingesetzt wurden, woraufhin dann die Anschlußleitungen einzeln in die Aufnahmehülsen eingesetzt und dort festgeschraubt wurden. Diese Arbeitsweise wurde dann als zu umständlich und zeitraubend verlassen, weil das Arbeiten im Inneren des Schaltschrankes, besonders dann, wenn sich die Ausnehmung für das Anbaugehäuse in der Nähe einer Schaltschrankseite befand, recht unbequem und unübersichtlich war.

Man hat dann die Anschlußleitungen vorher, das heißt im Inneren des Schaltschrankes oder sogar außerhalb desselben, in die Aufnahmehülsen des Kontakteinsatzes gesteckt und dort festgeschraubt und dann den an dem Bündel Anschlußleitungen hängenden Kontaktträger von innen her durch die Ausnehmung in der Wand des Schaltschrankes gesteckt und mit dem bereits von außen aufgesetzten Anbaugehäuse verbunden. Auch dabei ergaben sich Schwierigkeiten und Zeitverluste, weil es im Inneren des Schaltschrankes, besonders in der Nähe von Seitenwänden desselben, nicht einfach war, die Befestigungsschrauben durch die Löcher des Kontakteinsatzes hindurch in die Gewindebohrungen des Anbaugehäuses einzuführen.

Ein mehrpoliger Kontakteinsatz ist aus der DE-U-8308220.4 zu entnehmen
Der Erfindung liegt die Aufgabe zugrunde, diese Schwierigkeiten durch eine verbesserte Befestigung des Kontakteinsatzes mit dem Anbaugehäuse zu beseitigen und damit die Montagezeiten zu verkürzen.

Diese Aufgabe wird erfindungsgemäß dadurch gelöst, daß von der nach dem Einsetzen in die Wandausnehmung nach innen weisenden Seite des Anbaugehäuses vier mit Innengewinde versehene Montagesäulen vorstehen, auf deren Stirnseiten sich mit fluchtenden Bohrungen versehene, vom Kontakteinsatz vorstehende Haltelaschen auflegen, die mittels Schrauben an den Montagesäulen befestigt werden. Diese Montagesäulen werden je nach den besonderen Verhältnissen, insbesondere also der Stärke der Wand des Schaltschrankes, so lang gehalten, daß sie ausreichend weit über die Innenseite der Schaltschrankwand vorstehen und leicht optisch erkannt oder auch erfühlt werden können. Da sich die vom Kontakteinsatz vorstehenden Haltelaschen direkt auf die Stirnseiten dieser Montagesäulen auflegen, bereitet das Finden der Gewindebohrungen mit den Enden der Befestigungsschrauben keinerlei Schwierigkeiten mehr, besonders dann, wenn diese Schrauben unverlierbar in den Bohrungen der Haltelaschen aufgenommen sind.

Die vorbezeichnete Befestigung ist auch für eine Weiterbildung des Kontakteinsatzes mit Anbaugehäuse nach Anspruch 1 besonders geeignet, die darin besteht, daß zwischen den Kontakteinsatz und die Anschlußleitungen ein Klemmenadapter mit in Anzahl und Anordnung den Aufnahmehülsen entsprechenden Verbindungsstiften zum Einsetzen in die Aufnahmehülsen des Kontakteinsatzes und mit ebenfalls den Aufnahmehülsen in Anzahl und Anordnung entsprechenden und jeweils einzeln mit diesen elektrisch verbundenen Schraubanschlüssen für die Anschlußleitungen auf der dem Kontakteinsatz abgewandten Seite des Klemmenadapters eingeschaltet ist. Ein solcher Klemmenadapter, dessen dem Kontakteinsatz abgewandtes Ende vorzugsweise abgeschrägt ausgeführt ist, gestattet nach dem Anschrauben der Anschlußleitungen bzw. auch nach vollendeter Montage des Klemmenadapters an dem Kontakteinsatz und nach der Befestigung desselben an dem Anbaugehäuse leicht eine Spannungsprüfung der einzelnen Leitungen mittels Prüfspitzen oder auch ein nachträgliches Vertauschen oder Entfernen einzelner Anschlußleitungen.

Die Erfindung wird nachstehend in Ausführungsbeispielen anhand der Zeichnung näher erläutert. Dabei zeigen
- Fig. 1: einen Schnitt durch eine Schaltschrankecke mit aufgeschraubtem Anbaugehäuse und eingesetztem Kontakteinsatz mit Klemmenadapter;
- Fig. 2: einen Schnitt längs der Linie II-II in Fig. 1;
- Fig. 3: eine Darstellung ähnlich Fig. 1 eines in eine Schaltschrankecke eingesetzten Anbaugehäuses mit Kontakteinsatz, jedoch ohne Klemmenadapter, und
- Fig. 4: eine vergrößerte Teilansicht in Richtung des Pfeiles IV in Fig. 3.

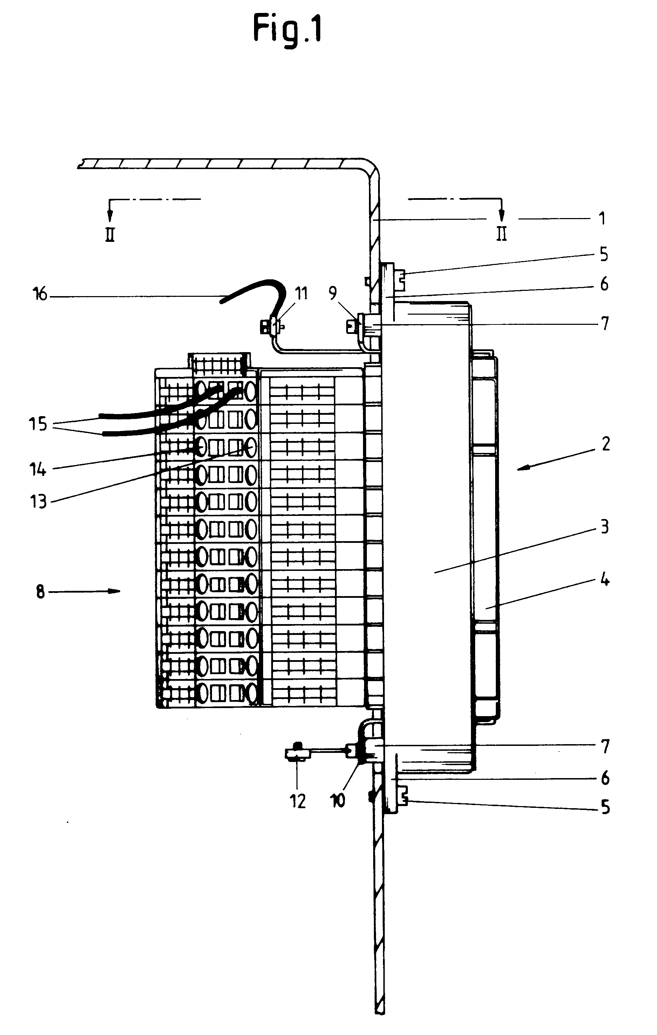

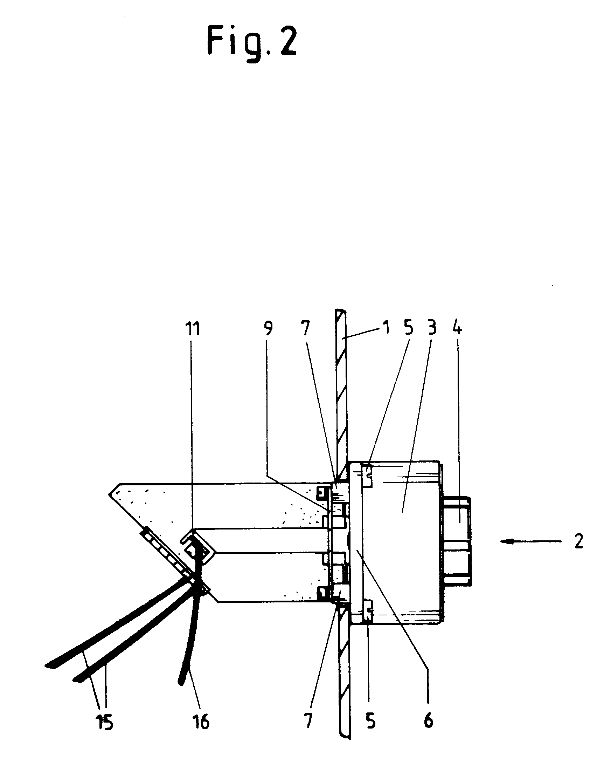

Bei der Ausführung nach Fig. 1 und Fig. 2 besitzt die Vorderwand 1 des Schaltschrankes eine etwa rechteckige Ausnehmung, auf bzw. in welche ein Anbaugehäuse 3 auf-bzw. eingesetzt ist. Dieses Anbaugehäuse besitzt an seinen Schmalseiten überstehende Flansche 6 mit je zwei Bohrungen, die zur Aufnahme von Befestigungsschrauben 5 dienen. Diese Schrauben sind in entsprechende Gewindebohrungen in der Schaltschrankwand 1 eingeschraubt.

Von der der Schaltschrankwand zugewandten Unterseite des Anbaugehäuses 3 stehen an den Schmalseiten je zwei Montagesäulen 7 vor, die in die rechteckige Ausnehmung in der Schaltschrankwand 1 hineinragen und diese im Inneren des Schaltschrankes noch ein Stück überragen.

Nach dem Aufschrauben des Anbaugehäuses ist der Kontakteinsatz 4 vom Inneren des Schaltschrankes her eingeschoben worden. Dieser Kontakteinsatz ist mit einem Klemmenadapter 8 verschraubt, der auf seiner abgeschrägten, im Inneren des Schaltschrankes liegenden Seite zwei Reihen von Kontaktöffnungen 13 und 14 aufweist, in die die Anschlußleitungen 15 eingesteckt und dort verschraubt sind.

Der Klemmenadapter besitzt an seiner dem Kontakteinsatz 4 zugewandten Seite eine Anzahl von (nicht dargestellten) Verbindungsstiften, die in Anzahl und Anordnung den Aufnahmehülsen auf der innen liegenden Seite des Kontakteinsatzes 4 entsprechen und in diese eingesetzt und dort verschraubt sind. Von diesen Verbindungsstiften führen im Inneren des Klemmenadapters elektrische Verbindungen zu den vorerwähnten Schraubanschlüssen 13 und 14 und stellen damit die Verbindung zwischen den Buchsen oder Stiften des Kontakteinsatzes 4 und den Anschlußleitungen 15 her.

Der Kontakteinsatz 4 ist an seinen Schmalseiten auf der nach dem Einbau auf der Schaltschrankwand aufliegenden Seite mit von dieser vorstehenden und in das Innere des Schaltschrankes hineinragenden abgewinkelten Haltelaschen 9 und 10 versehen. Diese Haltelaschen liegen im eingebauten Zustand auf den Montagesäulen 7 des Anbaugehäuses auf und werden mittels Schrauben an diesen Montagesäulen befestigt.

Die vorerwähnten Haltelaschen sind im dargestellten Ausführungsbeispiel noch mit verlängerten Abzweigungen versehen, die an jeder Schmalseite des Kontakteinsatzes eine Schraube 11 bzw. 12 zum Anschluß einer Erdleitung 16 tragen.

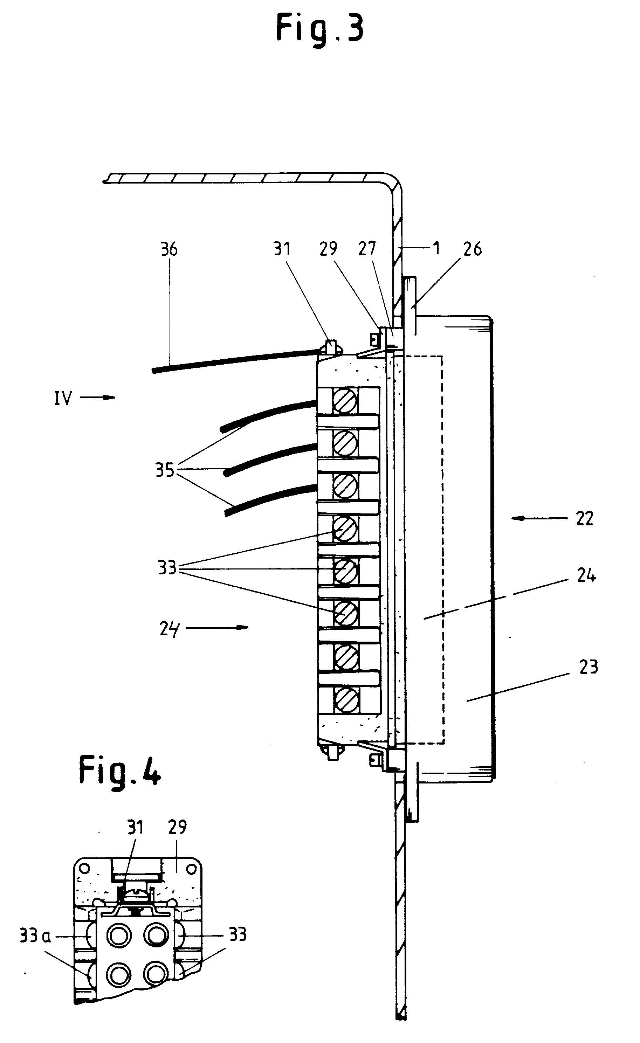

Die Ausführung nach den Fig. 3 und 4 zeigt ein auf die Schaltschrankwand 1 aufgeschraubtes Anbaugehäuse 23, das dieselbe Ausbildung wie das anhand der Fig. 1 und 2 beschriebene Anbaugehäuse aufweist und ebenfalls mit Montagesäulen 27 versehen ist, die durch die Ausnehmung in der Schaltschrankwand hindurch in das Innere des Schaltschrankes hineinragen und zur Aufnahme von Haltelaschen 29 dienen.

In dieses Anbaugehäuse ist, vom Inneren des Schaltschrankes aus, ein Kontakteinsatz 24 einfacher Ausführung, also ohne zwischengeschalteten Klemmenadapter, eingesetzt und mit ihm verschraubt.Dieser Kontakteinsatz ist bereits vor seiner Befestigung am Anbaugehäuse mit Anschlußleitungen 35 und einer Erdleitung 36 versehen worden, die jeweils in die Schraubanschlüsse 33 bzw. 31 eingesetzt wurden.

Wie aus Fig. 4 zu ersehen ist, entsprechen den Schraubanschlüssen 33 auf der gegenüberliegenden Seite ebensolche Schraubanschlüsse 33a.

Bei beiden Ausbildungen, also dem Kontakteinsatz mit Anbaugehäuse und Klemmenadapter nach den Fig. 1 und 2 sowie ohne Klemmenadapter nach Fig. 3 und Fig. 4 werden die Anschlußleitungen vorher montiert, was nicht in der die Handhabung erschwerenden Ecke des Schaltschrankes, sondern in einem größeren Freiraum erfolgen kann. Erst dann wird der Kontakteinsatz, mit oder ohne Klemmenadapter, in das Anbaugehäuse von innen her eingesetzt und mit diesem verschraubt. Das Verschrauben bereitet aufgrund der einwärts vorstehenden Montagesäulen 7 bzw. 27 bei beiden Ausführungen keinerlei Schwierigkeiten.

## Patentansprüche

1. Mehrpoliger Kontakteinsatz (4; 24) mit Anbaugehäuse (3; 23) für Schaltschränke o. dgl., wobei das Anbaugehäuse zum Einsetzen in eine Ausnehmung in einer Wand (1) des Schaltschrankes ausgebildet ist und mit diese Ausnehmung überragenden Flanschen (6; 26) auf der Außenseite der Wand mittels Schrauben (5) befestigbar ist, und wobei der mit Buchsen oder Stiften bestückte Kontakteinsatz (4; 24) von der Innenseite der Wand einsetzbar und mittels Schrauben am Anbaugehäuse (3; 23) befestigbar ist und auf der dem Anbaugehäuse abgewandten Seite mit metallischen Aufnahmehülsen und quer in diese eingesetzten Kontaktschrauben zur Aufnahme und Befestigung von Anschlußleitungen (15; 35) und auf der nach dem Einbau außen liegenden Seite mit Buchsen oder Stiften zur Aufnahme von Gegenstiften bzw. Gegenbuchsen eines aufzusetzenden Steckers versehen ist, wobei jede Aufnahmehülse elektrisch mit einer der Buchsen oder Stifte verbunden ist, **dadurch gekennzeichnet**, daß von der nach dem Einsetzen in die Wandausnehmung nach innen weisenden Seite des Anbaugehäuses (3; 23) vier mit Innengewinde versehene Montagesäulen (7; 27) vorstehen, auf deren Stirnseiten sich mit fluchtenden Bohrungen versehene, vom Kontakteinsatz (4; 24) vorstehende Haltelaschen (9, 10; 29) auflegen, die an den Montagesäulen befestigt werden.

2. Mehrpoliger Kontakteinsatz mit Anbaugehäuse nach Anspruch 1, **gekennzeichnet durch** einen zwischen den Kontakteinsatz (4) und die Anschlußleitungen (15) eingeschalteten Klemmenadapter (8) mit in Anzahl und Anordnung den Aufnahmehülsen des Kontakteinsatzes entsprechenden Verbindungsstiften zum Einsetzen in diese Aufnahmehülsen und mit ebenfalls den Aufnahmehülsen in Anzahl und Anordnung entsprechenden und jeweils einzeln mit diesen elektrisch verbundenen Schraubanschlüssen (13, 14) für die Anschlußleitungen (15) auf der dem Kontakteinsatz (4) abgewandten Seite des Klemmenadapters (8).

## Claims

1. A multi-contact insertion piece (4; 24) with annex case (3; 23) for switch cabinets or the like, with the annex case being designed to be inserted into a recess in a wall (1) of the switch cabinet and, via flanges (6; 26) projecting beyond said recess, being attachable to the outside of the wall by bolts (5), with the insertion piece (4; 24) provided with bushes or pins being insertable from the inside of the wall and attachable to the annex case (3; 23) by bolts and, at the end facing away from the annex case, being provided with metallic receiving sleeves and contact bolts transversely received therein for accommodating and fixing connecting lines (15, 35), and, at the end constituting the outer end after installation, being provided with bushes or pin for receiving counter-pins or counter-bushes of a plug to be applied, with each receiving sleeve being electrically connected to one of the bushes or pins,
characterised in
that from the end of the annex case (3; 23) pointing inwardly after the annex case has been inserted into the wall recess, there project four internally threaded assembly columns (7; 27) on whose end faces there are located holding clips which are provided with aligned bores, which project from the insertion piece (4; 24) and which are secured to the assembly columns.

2. A multi-contact insertion piece with annex case according to claim 1,
characterised
by a clamping adaptor (8) arranged between the insertion piece (4) and the connecting lines (15) and comprising connecting pins which, in respect of number and arrangement, correspond to the receiving sleeves of the insertion piece and which are intended to be inserted into said receiving sleeves, and further comprising bolted connections (13, 14) which, in respect of number and arrangement, again correspond to the receiving sleeves and are individually connected thereto and which are intended for the connecting lines (15) at the end of the clamping adaptor (8) facing away from the insertion piece (4).

## Revendications

1. Garniture multicontact (4; 24) avec boîtier en saillie (3; 23) pour armoires de manoeuvre ou analogues, étant précisé que le boîtier en saillie est conçu pour être inséré dans une découpe prévue dans une paroi (1) de l'armoire de manoeuvre et peut se fixer sur la face extérieure de la paroi au moyen de vis (5) par des rebords (6; 26) qui débordent de cette découpe; et étant précisé que la garniture multicontact (4; 24), équipée de fiches femelles ou de broches, peut s'insérer de par le côté intérieur de la paroi et se fixer sur le boîtier en saillie (3; 23) au moyen de vis et qu'elle comporte, du côté opposé au boîtier en saillie, des douilles métalliques de réception et des vis pour contact qui s'y vissent perpendiculairement pour recevoir et fixer des conducteurs de raccordement (15; 35) et, du côté situé à l'extérieur après le montage, des fiches femelles ou des broches pour recevoir des contre-broches ou des contre-fiches femelles d'un connecteur à y placer, étant précisé que chaque douille de réception est reliée électriquement avec l'une des fiches femelles ou l'une des broches, garniture caractérisée par le fait que, du côté du boîtier en saillie (3; 23) orienté vers l'intérieur après insertion dans la découpe de la paroi, dépassent quatre colonnes de montage (7; 27) qui présentent un filetage intérieur et sur les faces frontales desquelles reposent des pattes d'arrêt (9, 10; 29) qui présentent des perçages dans l'alignement, qui dépassent de la garniture multicontact (4; 24) et que l'on fixe aux colonnes de montage.

2. Garniture multicontact avec boîtier en saillie selon la revendication 1, caractérisée par un bornier (8) monté entre la garniture multicontact (4) et les conducteurs de raccordement (15) et comportant des broches de liaison, correspondant en nombre et en disposition aux douilles de réception de la garniture multicontact, pour insertion dans ces douilles de réception, et comportant, du côté du bornier (8) opposé à la garniture multicontact (4), pour les conducteurs de raccordement (15), des raccord vissés (13, 14) correspondant également aux douilles de réception en nombre et en disposition et électriquement reliés, chacun individuellement, avec ces douilles de réception.
